# EUROPEAN PATENT APPLICATION

(11) **EP 4 187 628 A1**
(43) Date of publication of application: **31.05.2023**
(21) Application number: 21211389.8
(22) Date of filing: 30.11.2021
(51) Int. Cl.: H01M 4/00, B29C 64/10, H01M 4/13, H01M 10/0525

(54) **AN ANODE FOR USE IN A BATTERY AND A METHOD FOR MANUFACTURING THEREOF**

(71) Applicant: VITO NV, 2400 Mol (BE)
(72) Inventor: SALLARD, Sébastien, B-2400 Mol (BE); LEFEVERE, Jasper, B-2400 Mol (BE)
(74) Representative: V.O.

(57) **Abstract**

The invention relates to an anode and a method of manufacturing of the anode, the anode being for use in a battery. A build material comprising a carbon based active material is used. Furthermore, interconnected filaments of a build material are deposited in a predetermined arrangement in a plurality of stacked layers, wherein the filaments of the consecutive layers are connected to one another to obtain a porous anode structure with intra-structure pores formed between filaments.

## Description

### FIELD OF THE INVENTION

The invention relates to a method of manufacturing of an anode for use in a battery. The invention also relates to an anode for use in a battery. Furthermore, the invention relates to a battery and a battery cell containing such anode. Additionally, the invention relates to an additive manufacturing system.

### BACKGROUND TO THE INVENTION

Energy storage devices, such as Li-ion batteries, are central to consumer electronics industry, transportation systems and energy grids. Typically, Li-based batteries have a relatively high capacity, high voltage, and lower mass density compared to other battery systems. This makes Li-ion batteries ideal for a wide range of different products, such as electric car batteries, smartphones and other rechargeable systems. However, the structure of battery cells and the materials used in their construction tend to make commercial Li-ion batteries more expensive than equivalent batteries with aqueous electrolytes.

Rechargeable Li batteries nowadays use as an anode a carbon-based material or other alloy that permits intercalation of Li+ in the solid electrolyte interphase (SEI) layer. Graphite is often used as anode material as large concentration of Li+ can intercalate/de-intercalate or adsorb/desorb from carbon material (C:Li = 6:1) during charging/discharging.

Graphite may be used as the anode material for its outstanding stability. However, the easy movement of the graphene planes along the a-axis direction during the intercalation and de-intercalation of lithium leads to a volume change, which makes it a very challenging material to use in 3D printing of anodes. Up till now, Lithium-titanate oxide (LTO) has mainly been used in additive manufacturing of anode materials, to avoid this issue.

Many challenges still have to be overcome to come to a greater adoption and efficient use of renewable energy sources. In particular increasing storage capacity, increasing charging capacity without decreasing the charging/discharging rate or power, increasing discharge rate and prolonging lifetime continue to be main challenges to be overcome. Particularly if the driving range of electric cars is to be extended increasing the charge capacity and discharge power remains a problem to be solved. A further challenge involves thermal losses during operation of the battery, which should not raise further. Improving these aspects of battery performance could at least partially be achieved by changing the battery chemistry, but this would create barriers to scaling and safety risks.

Conventional electrodes for use in energy storage devices usually have a block geometry and are made by mixing the electrode materials with one or more binders, and the mixture is then pressed onto the electrode. However, this way of making the electrode leads to an inappropriate pore structure, as a result of which ion transport in the electrode is limited. Slow kinetics related to ion and electron transport severely limit maximum power density/discharge rate of a battery. Additionally, in particular for Li-ion batteries it is estimated that a significant part, i.e. 30 to 50% of the electrode remains unutilized during the battery operation (US2020112030A1). Reducing the characteristic ion and electron diffusion lengths within the active battery material has proven to be successful in increasing power densities and discharge rates. However, this has also resulted in a substantial decrease in energy density (US2020112030A1).

Thick electrode designs may substantially increase the active material loading by decreasing the inactive component ratio at the cell level, thereby leading to increased battery energy density as well as decreased cost. The effect of the thickness may diminish when the thickness of the anode is increased too much. If the thickness of the anode is above a certain threshold, the resulting capacity may become stagnant. Increasing the thickness further may have only limited effect on the capacity. In some cases, an increase of said thickness above a threshold may even result in a reduction of the capacity. A too large thickness of the anode may result in poor charge transfer kinetics of thick electrodes. The infiltration of the electrolyte may be impeded, and the ion transfer distance may be significantly increased.

There is a strong desire to produce anodes having increased capacity, even for larger thicknesses, such as for example for a thick electrode design approach.

### SUMMARY OF THE INVENTION

It is an object of the invention to provide for a method of manufacturing an anode which obviates at least one of the above mentioned drawbacks.

Additionally or alternatively, it is an object of the invention to provide for improved anodes for use in batteries.

Additionally or alternatively, it is an object of the invention to provide for thicker anodes with adequate areal capacity.

Additionally or alternatively it is an object of the invention to provide an anode for use in a battery, the anode having a high specific capacity that may be maintained at a desired level during subsequent charging-discharging cycles.

Thereto, the invention provides for a method of manufacturing of an anode for use in a battery, including depositing interconnected filaments of a build material in a predetermined arrangement in a plurality of stacked layers, wherein the filaments of the consecutive layers are connected to one another to obtain a porous anode structure with intra-structure pores formed between filaments, wherein the build material comprises a carbon based active (anode) material.

The method of this invention provides a significantly improved electrode design. A thick electrode design approach may be obtained with increased active material loading. A higher areal capacity can be achieved due to the higher achievable electrode loading per unit of surface area. The amount of active material per unit of surface area can be increased. Advantageously, the anode may be made thicker whilst providing an adequate areal capacity. Additionally, the charge rate can be improved. Therefore, a thick electrode design approach may be used with improved areal capacity. As a result of the spatial design of the meshed/lattice anode structure, which is obtained by performing the 3D printing of the filaments in a predetermined arrangement in a plurality of stacked layers, various channels or pores can be formed between the filaments, such that the electrolyte can more easily access the active material (for example for lithium-ion batteries). A larger portion of the anode can be accessed, even in an anode with a thickness that is larger than conventionally used. As a result, the lithium ions can more easily access the carbon based active material. Even a lower and/or bottom portion of the anode can still be accessible. An inactive component ratio can be reduced, thereby leading to increased battery energy density. Moreover, the costs of the battery can be reduced. In some examples, the design (e.g. size, shape, pattern, etc.) of the pores can be selected based on the thickness of the of the anode. This allows for a predictable design of the anode for achieving desired performances.

Moreover, a high charge/discharge reversibility, i.e. after having been discharged, the anode may be re-charged to almost its initial capacity, can be obtained. This reversibility is maintained in time, i.e. after many charging-discharging steps.

Furthermore, accessibility of carbon anode active material is significantly better than in prior art materials, in the course of charging (lithiation) and discharging (delithiation), less compromised or slowed down by diffusion phenomena.

The electrode architecture according to the disclosure can be used for thick electrode design. Advantageously, the electrolyte permeability and ion transfer rate can be significantly increased.

Optionally, the interconnected filaments form a lattice structure. The lattice structure may be a predefined cellular structure with pores. Various shapes and dimensions are possible. Advantageously, the lattice structure may have a large specific surface area.

Typically, an anode with a carbon based active material is configured to be used with a relatively low operating voltage. Optionally, the anode is configured to be used with an operating voltage of below 1 V with Li-metal as counter-electrode.

The used carbon based build material may be particularly suitable for use in robocasting, i.e. a technique where a viscous paste is fed to a nozzle with a desired cross section, displaced through the nozzle and expelled from the nozzle to be deposited on a print surface as a viscous paste in the form of filaments or fibres or struts or beads or the like. Robocasting may also be referred to as 3D printing, 3DFD, 3D fibre deposition, filament deposition, micro-extrusion etc., or a combination of two or more of these. In particular, the paste composition described above is suitable for us in a system for manufacturing a three dimensional structure, the system including: an extrusion unit including a nozzle with a nozzle outlet and a paste reservoir in fluid communication with said nozzle outlet, wherein the extrusion unit is arranged for depositing, through the nozzle outlet, filaments of the paste composition in a predetermined interconnected arrangement in a plurality of stacked layers for forming a three dimensional structure, a measuring unit including at least one sensor at the nozzle for monitoring, during discharge of the filaments by the extrusion unit, a pressure value applied on the build material in the material reservoir of the nozzle for discharging said build material through the nozzle outlet, and a processing unit configured to adjust extrusion when an irregular rising and/or falling of the pressure value occurs. Examples of deposition parameters that may be adjusted in the course of the printing process to compensate for an irregular rising or falling of the pressure value include without being limited thereto adjusting, i.e. increasing or reducing, the pressure exerted to the build material for example in the build material reservoir or in the nozzle or at any position of the build material feed line before the build material leaves the nozzle; adjusting the viscosity of the build material, for example by heating or cooling the build material, by adjusting the amount of solvent contained in the build material, by supplying a release agent, in the reservoir, the nozzle or any position of the build material feed line before the build material leaves the nozzle; adjusting the build material flow rate, subjecting the build material to vibration; adjusting the nozzle opening, etc.

Optionally, a mesh of pores is formed in each layer.

Carbon based active material and the specific mesh-like structure provides some important advantages. Such a structure with pores obtained by the specific deposition arrangement, allows for even thicker design of the anode, such that the active material becomes more accessible, and the energy capacity of the battery can be significantly increased.

The 3D printed anode may be built by printing a series of filaments positioned such as to form a porous structure having a regular pattern of pores formed between filaments. The porous structure may have an interconnected arrangement of filaments forming a meshed/lattice structure.

Optionally, the mesh of pores has a regular pattern, wherein the pores are interconnected in the porous anode structure.

The 3D printed carbon based anode can provide for a high areal capacity. For example, a graphite anode may be printed in a lattice structure with pores in a regular pattern. A high amount of active materials per surface area can be obtained in an efficient manner, resulting in a high capacity per unit of surface area.

Optionally, the build material comprises at least 60 wt.% of a carbon based anode active material, more preferably at least 80 wt.%, even more preferably at least 85 wt.% with respect to the total weight of the build material

Advantageously, the amount of active material in the anode of a battery can be effectively increased.

In some examples, a binder is used in the build material. In some examples, a weight percentage of binder in the build material is smaller than 10 wt% with respect to the total weight of the build material.

Various binders and additives may be added to the build material. For example, one or more conductive additives may be added. In some examples, a weight percentage of carbon in the build material is in a range above 85 wt%, preferably above 90 wt. %, more preferably above 92 wt. % with respect to the total weight of the build material.

The amount of binder present in the build material may vary within a wide range, but the amount of binder in the build material will preferably be at least 0.01 wt. %, in weight percent dry matter, with reference to the total weight of the build material, preferably at least 0.025 wt. %, more preferably at least 0.10 wt. % or 0.25 wt. %, most preferably at least 0.50 wt. % or at least 0.75 wt. %, or at least 1.0 wt. %. It is further understood that the at least one binder component will usually be contained in the paste composition in an amount which is at most 7.5 wt. %, preferably at most 6.0 wt. %, more preferably at most 5.0 wt. %, most preferably at most 3.0 wt. %, in particular at most 2.5 wt. % in weight percent dry matter, with reference to the total weight of the build material.

Where the build material contains at least one binder, said at least one binder component can be an inorganic or an organic compound or a mixture of one or more inorganic and one or more organic compounds. The binder may be of a more hydrophilic or a more hydrophobic nature. Preferably, said at least one binder is an organic compound, more preferably an organic compound capable of modifying the rheology or flow properties of the paste composition under the influence of pressure. The at least one binder component may be selected from one or more of the following: plasticizers, hydrocolloids, cellulose derivates like methyl cellulose, ethyl cellulose, and/or derivatives thereof such as carboxymethyl cellulose, carboxyethyl cellulose, and/or combinations thereof, polyvinylidene fluoride (PVDF; polyvinylidene fluoride), polytetrafluoroethylene (PTFE), polymeric alcohols in particular polyvinyl alcohol, polyalcohols for example polyethylene glycol, polyvinylpyrrolidone, poloxamers i.e. nonionic triblock copolymers capable of self-assembling and thermos-gelling and composed of a central hydrophobic chain of polyoxypropylene (poly(propylene oxide) flanked by two hydrophilic chains of polyoxyethylene (poly(ethylene oxide) generally available under the name Syperonic (Croda), Pluronic (BASF) and Kolliphor (BASF), and combinations of two or more of the afore-mentioned binder materials. It shall be clear to the skilled person that other materials showing equivalent properties can be used as well.

In some examples, a conductive binder such as PEDOT:PSS is used.

Optionally, the carbon based active material includes at least one of graphite, soft carbon, hard carbon or a composite thereof.

The electrode active material refers to a material that participates in an actual electrode reaction. As the electrode active material, a carbon-based material may be used. Carbon-based materials are preferred for the anode, because of their availability, low cost, and performance. In addition, carbon materials protect the lithium from dendrite formation while recharging the battery. Carbon-based materials are available in various forms. Preferably, carbon materials that are economical and eco-friendly and have a large specific surface area can be used. Carbon materials used for the electrode active material may be activated carbon, hard carbons i.e. carbon that cannot be converted to graphite by heat-treatment, soft carbons which can be readily converted into graphite by heat treatment, carbon nanotubes (CNTs), carbon nano springs, carbon nano rods, graphite, graphite flakes, graphenes, carbon aerogels, acetylene black, Ketjen black, and Super-P^{®} and the like. Preferred carbon materials include activated carbon, soft carbons, graphite, graphite flakes, graphenes, carbon aerogels, acetylene black, Ketjen black, and Super-P^{®} and the like for their ability to reversibly incorporate metal ions in their layered structure. These materials have a high electrical conductivity.

Other carbon based materials or compositions may also be used, such as for example a Si-C active material. In some examples, most of the capacity achieved by using the carbon based active material may come from the carbon.

Optionally, the carbon based active material has a carbon mass content of at least 50 wt%, more preferably at least 60 %wt, even more preferably at least 80 %wt with respect to the weight of the carbon based active material.

Optionally, the carbon based active material is a compound of a non-carbon material and a carbon material, wherein the carbon material is present in a mass percentage of at least 50 wt%, more preferably at least 60 %wt, even more preferably at least 80 %wt with respect to the weight of the carbon based active material.

Optionally, the porous anode structure has a thickness in a range between 0.1 to 5 millimeter, more preferably in range of 0.2 to 1 millimeter, even more preferably in a range of 0.4 to 0.7 millimeter.

The 3D printed carbon-based anode may enable an electrode of thick design having advantageous properties. The carbon-based anode may have a high areal capacity. The anode has open pores in its thickness direction, forming a series of channels between the filaments. The capacity of a battery can be effectively increased.

Advantageously, the anode can be operated with a low operating voltage. The carbon based anode may have an operating voltage below 1 V with Li-metal as counter-electrode. In some examples, the filaments contain at least 85 wt% of a carbon material.

Optionally, the deposited anode has at least two stacked layers, more preferably at least three stacked layers, even more preferably at least four stacked layers.

Optionally, the deposited anode has a capacity per unit surface area of at least 8 milliampere hour per cm², more preferably at least 10 milliampere hour per cm², even more preferably at least 12 milliampere hour per cm².

Optionally, the deposited anode has a specific capacity per gram of anode material of at least 80% of a theoretical specific capacity calculated from the composition of the build material, preferably at least 85%, more preferably at least 90 %.

A large portion of the material of the anode may become active. With conventional thick electrodes, such increased capacity cannot be obtained.

The amount active material results in storage of energy in the battery. It is thus desired to have a large amount of active material. In this way, the capacity and/or weight of the battery can be effectively reduced. Decreasing a gap distance between adjacent filaments in the layers may result in an increased loading. Furthermore, the layers of filaments may be stacked in different ways.

Optionally, the filaments have a diameter between 50 to 750 micron, more preferably 75 to 500 micron.

Optionally, the filaments in each layer are spaced apart, wherein a gap distance between opposing adjacent filaments in each layer is smaller than the thickness of the filaments.

Advantageously, the areal capacity can be significantly increased.

Optionally, the filaments are deposited such that the intra-structure pores have a shape with a wider opening approximate a first end of the porous anode structure and a narrower opening approximate a second end of the porous anode structure, the second end being opposite the first end, and wherein the wider opening is formed at one or more upper layers of the stacked layers.

In the thickness direction of the porous anode, the size of the pores may change. The upper layers may be positioned on top of the lower layers during printing. For example, the top (free end) of the anode may be more open than the bottom. As a result, the bottom portion of the anode may have more contact surface area for conductivity, and the pores may be more open on the upper/top portion (cf. free end, opposite the bottom/lower portion) which is beneficial for liquid diffusion. This can be achieved by manufacturing the anode by means of the 3D printing method according to the disclosure.

The method of printing the anode according to the disclosure has a significant beneficial effect on the achievable areal capacity. Various porous anode structures may be 3D printed.

The pores in the stacked layers may have various shapes. The shape of the pores may be determined by the specific arrangement of the filaments in the plurality of layers. For example, the pores may have a polygonal shape.

Optionally, the pores in the stacked layers have a rectangular shape.

Advantageously, the filaments may be deposited along straight lines so as to effectively reduce the manufacturing time, even for complex lattice structures. The filaments may be deposited along straight line paths, resulting in rectangular shaped pores. Since a fast deposition process can be obtained, the method can be employed for mass production of such anodes. Additionally or alternatively, material waste as a result of the additive manufacturing process may be reduced. Additionally or alternatively, an accurate fabrication for anode lattice structures with good quality can be obtained.

Other shapes are also possible. For example, the pores may have a triangular, hexagonal, etc. shape. Additionally or alternatively, it is possible that the pores have curved sides. Additionally or alternatively, it is possible that the pores have a lobed design, e.g. quadri-lobe shape.

According to an aspect, the invention provides for an anode for use in a battery, the anode including interconnected filaments of a build material positioned in a predetermined arrangement in a plurality of stacked layers, wherein the filaments of the consecutive layers are connected to one another to obtain a porous anode structure with intra-structure pores formed between filaments, wherein the build material comprises a carbon based active material.

The anode can be made in a larger thickness than what can be obtained with existing techniques such as doctor blading. A higher areal capacity can be achieved for the same amount of material, i.e. the areal capacity can be increased with at least 50% in comparison to prior art materials. Additionally, the charge rate can also be substantially increased. The areal capacity can be understood as the capacity per surface area unit of the anode material. The areal capacity is preferably at least 10 mAh/cm², preferably at least 12 mAh/cm², after 5 cycling steps comprising charging and discharging of a battery incorporating the anode.

The higher areal capacity per unit weight of material may be achieved for a same specific capacity of the material. Specific capacity per g of anode material (mAh/g) is at least 80% of a theoretical specific capacity calculated from the composition of the anode material, preferably at least 85%, more preferably at least 90 %.

According to an aspect, the invention provides for a battery cell/system comprising a three-dimensional porous anode structure according to the disclosure.

According to an aspect, the invention relates to an additive manufacturing system comprising a controller which is configured to perform the method according to the disclosure.

According to an aspect, the invention provides for a carbon based anode having a three-dimensional structure and comprising a plurality of interconnected filaments of an anode material positioned in a predetermined three-dimensional arrangement in a plurality of consecutively stacked layers, wherein the anode material comprises: an anode active material in an amount of at least 24 mg/cm² (e.g. corresponding to at least 8 mAh/cm²); a binder and a solvent; wherein the anode active material comprises at a carbon based particulate material, wherein the filaments of the consecutive layers are connected to one another at least at contact points between filaments of consecutive layers to obtain the porous structure with interconnected pores between the filaments, the filaments of the consecutive layers being at an angle to each other.

Optionally, the carbon based anode has a capacity per surface area unit of at least 10 mAh/cm², preferably at least 12 mAh/cm², after 5 cycling steps comprising charging and discharging of a battery incorporating the anode.

Optionally, the carbon based anode has a specific capacity per g of anode material (mAh/g) of at least 80% of a theoretical specific capacity calculated from the composition of the anode material, preferably at least 85%, more preferably at least 90 %.

Optionally, the carbon based anode has a charge/discharge reversibility when cycling the anode of at least 90 %, preferably at least 95%, more preferably at least 98%, most preferably 99.5%.

Optionally, the carbon based anode has macro-pores between filaments and meso- and/or micropores within filaments, at least part of them giving access to macro-pores.

According to an aspect, the invention provides for a method for manufacturing a three-dimensional carbon based anode by manufacturing a three-dimensional porous structure, the method including depositing interconnected filaments of a build material leaving an extrusion nozzle in a predetermined arrangement in a plurality of consecutively stacked layers, wherein the build material comprises a viscous material composition comprising a carbon based particulate material, wherein the filaments of the consecutive layers are connected to one another at least at contact points between filaments of consecutive layers to obtain the porous structure with interconnected pores between the filaments, the filaments of the consecutive layers being at an angle to each other, wherein the build material comprises at least 50 wt.%, preferably at least 60 wt.%, more preferably at least 70 wt.% of a carbon based anode active material.

Optionally, the build material further comprises 0.5-25 wt.% of at least one binder material, preferably 1-15 wt.%, more preferably 1-10 wt.%. The amount of binder must be high enough in order to achieve a specific capacity which is as high as possible.

Optionally, the solvent comprises one or more of water, alcohol, or the like.

Typically, the solvent is water, preferably deionized water. Alternatively, the solvent can be one of the following or a mixture of two or more thereof: water, an organic solvent, an ionic liquid or a mixture of two or more hereof. Suitable solvents include water, an alkanol, a ketone, or a mixture of two or more hereof, more preferably one or more solvents selected from the group of water; deionized water, ethanol, isopropyl alcohol, acetone, ethyl acetate or a mixture of two or more hereof. Other solvents that may be considered for use with the present invention include 1,2-propanediol, 1,3-dioxolane, 1,4-dioxane, 1-methyl-2-pyrrolidinone, 2-(2-Butoxyethoxy)ethyl acetate, acetonitrile, butoxy ethyl acetate, dimethyl adipate, dimethyl carbonate, hexane, methyl ethyl ketone, methyl isobutyl ketone, n-pentane, xylene, etc

Optionally, the build material comprises at least one thermoplastic material with the purpose of reducing volume changes during charging/ discharging.

Optionally, the build material is a viscous paste or a viscous suspension of the inorganic particulate material.

It will be appreciated that the weight percentage(s) may be based on a dry matter content, for example moisture (e.g. solvent such as water) removed after a drying/conditioning step. A solvent may for instance be added to the build material in an amount such as to have a composition which is more suitable for some additive manufacturing techniques, such as for example extrusion printing or robocasting.

It will be appreciated that various additive manufacturing technologies may be used for producing the anode. The additive manufacturing may be based on a layer-by-layer process from computer-aided design models. For example, an extrusion process may be used wherein build material is extruded from a nozzle. As a result of relative movement between the nozzle and the surface on which build material is deposited, the lattice anode structure can be printed.

It will be appreciated that any of the aspects, features and options described in view of the method apply equally to the anode, the additive manufacturing system and the described battery. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1a, 1b show a schematic diagram of an exemplary embodiment of an anode porous structure;
Fig. 2 shows a schematic diagram of an exemplary embodiment of an anode porous structure;
Fig. 3 shows a schematic diagram of an exemplary embodiment of an anode porous structure;
Fig. 4a, 4b, 4c show an image of an exemplary embodiment of an anode porous structure;
Fig. 5 shows a schematic diagram of an exemplary graph;
Fig. 6 shows a schematic diagram of an exemplary graph;
Fig. 7a, 7b, 7c show an image of an exemplary embodiment of an anode porous structure;
Fig. 8 shows a schematic diagram of an exemplary graph;
Fig. 9 shows a schematic diagram of an exemplary graph;
Fig. 10 shows a schematic diagram of an exemplary graph;
Fig. 11a, 11b, 11c show an image of an exemplary embodiment of an anode porous structure;
Fig. 12 shows a schematic diagram of an exemplary graph;
Fig. 13 shows a schematic diagram of an exemplary graph;
Fig. 14 shows a schematic diagram of an exemplary graph; and
Fig. 15 shows a schematic diagram of an exemplary embodiment of an anode porous structure.

### DETAILED DESCRIPTION

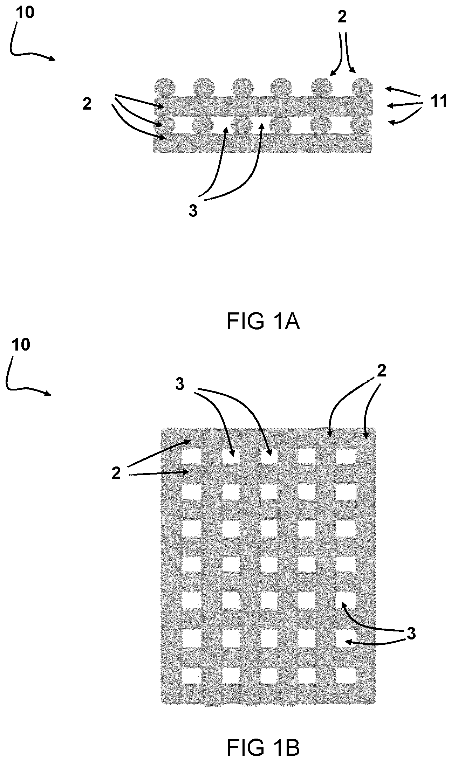

Fig. 1a, 1b show a schematic diagram of an exemplary embodiment of an anode porous structure 10 for use in a battery. Fig. 1a shows a cross sectional side view, and fig. 1b shows a top view. The anode includes interconnected filaments 2 of a carbon based active build material positioned in a predetermined arrangement in a plurality of stacked layers 11, wherein the filaments of the consecutive layers are connected to one another to obtain a porous anode structure 10 with intra-structure pores 3 formed between filaments 2. The way the build material in the form of filaments is stacked in the plurality of layers of the porous anode structure has a considerable impact on the areal capacity achievable by said anode.

The filaments may be for example printed by employing an extrusion additive manufacturing process or a dispenser printing process. In the exemplary extrusion process, a print path may be followed for manufacturing the three-dimensional anode porous structure 10. The filaments may be deposited by a nozzle along said print path. The filaments of the consecutive layers are angled with respect to each other. In the extrusion process, a nozzle can be moved/scanned along a print surface depositing filaments following the print path. It will be appreciated that it is also envisaged that the print surface is moved instead of the nozzle 1 (kinematic inversion). A combination is also possible. In an alternative example, both the nozzle 1 and the print surface can be moved during at least portions of the deposition process.

It will be appreciated that large variety of print path arrangement are possible for obtaining the arrangement of the interconnected filaments of the porous structure. By altering the deposition pattern, the properties of the anode porous structure 10 can be changed, so that a desired areal capacity can be obtained. In this example, the porous anode structure being printed has a homogeneous filament-to-filament distance (interspacing), however it is also possible to employ a non-homogeneous filament-to-filament distance, for example at the sides of the anode.

In some examples, a spacing between the filaments of the anode porous structure 10 is smaller than the thickness of the filaments. If the spacing is too large, it can result in detrimental effects on the loading, since the total empty void space increases (i.e. less active material per unit surface area). In some examples, the spacing between the filaments is in a range of 30-200 micrometer, more preferably in a range of 50-180 micrometer. For example, the spacing may be about 150 micrometer, and the filaments may have a thickness of about 200 micrometer.

The pores may have various shapes. For example, the pores may be rectangular shaped or square shaped. However, various other shapes are also possible (not shown in this figure).

Filaments 2 have been deposited in a predetermined interconnected arrangement in a plurality of stacked layers 11 for forming an anode porous structure 10 with interconnected pores 3. The porosity influences the areal capacity. The size and shape of the pores may depend on the deposited filaments and their print paths. For example, the size of the filaments, the filament orientation, the filament distances, the thickness of the anode porous structure 10 or the number of layers stacked on top of each other, etc., can highly impact one or more performance properties of the battery in which the anode is used (e.g. Li-ion battery). For instance, a porous structure with a 0/90, 0/60/120 and 0/45/90/135 filament orientation may result in different pores and thus different areal capacities. It will be appreciated that other lay-down patterns are also envisaged, such as for example triangular, rectangular, hexagon, curved, zigzag patterns. These lay-down patterns can also influence the pore size.

The anode porous structure 10 includes a plurality of filaments 2 being distanced from each other in a plurality of stacked layers 11. As a result of the specific arrangement of the filaments 2, the anode porous structure 10 forms a plurality of voids (i.e. empty space) which form interconnected pores of the anode porous structure 10.

Advantageously, thicker electrodes can be obtained. Optionally, the porosity of the printed anode is selected based on the thickness of the anode. The thickness of the anode can be increased whilst mitigating the effect of reduced amount of active material. As a consequence, the capacity can be effectively increased.

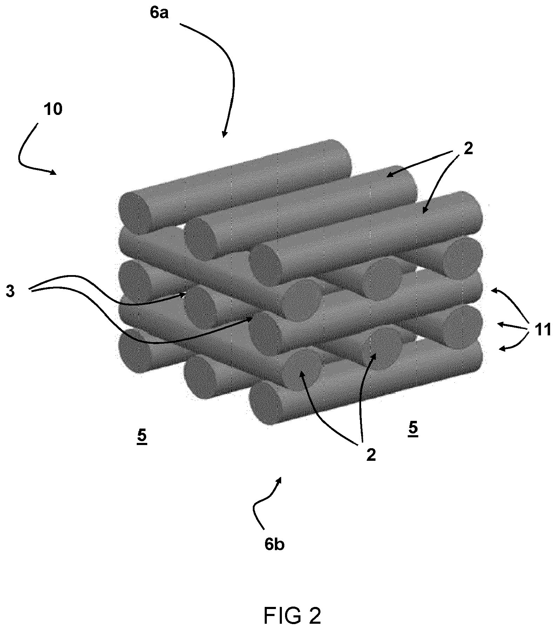

Fig. 2 shows a schematic diagram of a perspective view of an exemplary embodiment of an anode porous structure 10. The anode porous structure 10 has been 3D printed on a print surface 5 by depositing filaments in different layers which are stacked on top of each other. The anode porous structure 10 has an upper portion 6a, and a bottom portion 6b. The lower portion 6b may be in contact with the print surface 5.

At least two layers may be stacked on top of each other. Preferably, at least three layers are stacked. For example, the total number of layers stacked on top of each other may be in a range of 3-5. In this example, the exemplary anode porous structure 10 has five layers.

From production point of view, it can be beneficial to manufacture the anode by performing deposition of filaments along straight lines. The printing process may be accelerated by printing filaments along straight lines in an arrangement such as to form a regular pattern of intra-structure pores in the anode porous structure 10 (cf. lattice/meshed porous structure).

In some examples, the filaments are printed by employing an extrusion printing process.

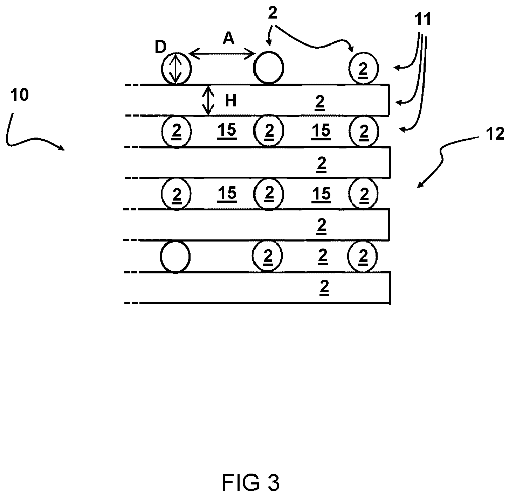

Fig. 3 shows a schematic diagram of a cross sectional side view of an exemplary embodiment of an anode porous structure 10. The porous structure 10 has a plurality of layers 11 of deposited filaments 2 stacked on each other. The filaments 2 have a filament diameter D and a filament-to-filament distance A. A layer may have a height H. This height may correspond substantially to the filament diameter D. However, variations are also possible. By employing a different height H, the pores in the vertical and horizontal directions can be changed. In this way, the areal capacity can be further increased.

The porous 3D printed anode structure enables to manufacture batteries with significantly higher areal capacities compared to batteries known in the art. In some examples, a minimum areal capacity of 8 milliampere hours per square centimeter can be obtained. In some examples, the areal capacity is higher than 10 milliampere hours per square centimeter, or even higher than 14 milliampere hours per square centimeter.

A build material can be extruded in the form of a first layer, the first layer including a plurality of filaments 2. The filaments 2 may for instance be part of an elongated strand of deposited carbon based build material. In an example, the elongated strand is deposited continuously. However, a non-continuous deposition is also possible. Furthermore, one or more additional layers can be extruded, each additional layer being vertically stacked upon a previously extruded layer and also comprising a plurality of filaments 2 angled with respect to a number of filaments 2 of the previous layer. A predetermined pattern is dispensed so as to define the three-dimensional object being manufactured.

The capacity per unit surface area (e.g. per cm²) is affected by the structural properties of the anode. The areal capacity relates to the active material per unit surface area. By depositing the filaments in a predetermined arrangement in a plurality of stacked layers, wherein the filaments of the consecutive layers are connected to one another to obtain a porous anode structure with intra-structure pores formed between filaments, more active material per unit surface area (e.g. per cm²) can be obtained.

The areal capacity of an electrode is a function of the electrode thickness and volumetric capacity of the electrode. The active material properties such as the specific capacity, the crystal density and the volume fraction in the electrode also influence the areal capacity. Advantageously, a specific capacity may be obtained which is at least 80% of a theoretical specific capacity based on the composition of the anode material, preferably at least 85%, more preferably at least 90 %. This specific capacity may be maintained in time, i.e. after many charging-discharging steps.

### EXAMPLES

Testing conditions, instrumentation and preparation of cells is described in this paragraph. Coin cells (CR2032) were assembled in an argon filled glove box (Jacomex GP-concept) with H₂O < 1 ppm and O₂ < 1 ppm with 3D printed graphite-based electrodes (area: 1.80 cm², diameter: 15.1 mm) and a disc of lithium metal (Alfa Aesar 99.9%) of 16 mm diameter as the negative electrode. A polymeric separator (Celgard 2400, diameter: 19 mm) was positioned between the two electrodes. Each cell was filled with 200 µL of a standard LP30 electrolytic solution (SoulBrain MI), i.e. 1M lithium hexafluorophosphate LiPF₆ in ethylene carbonate (EC) and dimethylcarbonate (DMC) with 1:1 as weight ratio. The cells were sealed with a pneumatic press in the glove-box and transferred in a temperature chamber at 25°C and connected to the battery tester BCS-810 from Bio-Logic for galvanostatic cycling. The coin cells were equilibrated for 6 hours at open circuit voltage (OCV) and then cycled over a voltage range of 0.02 - 1.0 V vs. Li⁺/Li by galvanostatic charge discharge, i.e. constant current. C-rate is defined as 1C to correspond to one full charge or discharge in one hour. Based on the theoretical specific capacity of the graphite of 372 mAh/g, 1C-rate = 372 mA/g and C/10-rate = 37.2 mA/g of graphite. The other components of the electrode (carbon additive, binders, carbon fibers...) are supposed to do not contribute to the capacity of the electrode.

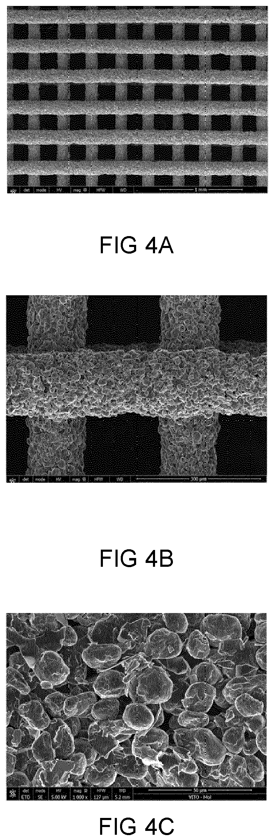

Fig. 4a, 4b, 4c show an image of an exemplary embodiment of an anode porous structure. The image is obtained by using a scanning electron microscope. The printed structure includes graphite 90 w.% and CMC (pH = 3) 10 w.% as binder. The anode composition is 90/10 in weight %.

The SEM images shown in figs. 4a-4c show the magnified network of graphite electrode. The shape and diameter of the fibers is very regular and is close to 150-160 micrometer. Taking in account an initial diameter of 200 µm (size of the nozzle used), a shrinkage of ca. 25% in diameter and 45 % in volume occurred during the dying. The dried 3D printed electrodes show a homogenous aspect, no surface cracks or even cut of the fiber can be observed despite the stress induced by such important shrinkage. The fibers appear to be composed of randomly packed irregular spheres ("potatoes-shaped" in the battery vocabulary) with a diameter of ca. 15 µm in agreement with the particle size distribution of the graphite powder. No change of the graphite particle morphology occurred during the paste preparation and the printing of the electrode. Any presence of the CMC polymer is hardly visible. It proves the very fine dispersion of the polymeric binder within the all 3D printed graphite electrode to insured a good mechanical cohesion. The higher magnification shows that the 3D printed electrodes are obviously porous even at micrometric scale due to the irregular packing of the graphite particles. A minimal porosity is needed to allow a good wetting of all the graphite particle, even the ones present in the depth of the fiber, in order to get sufficient Li-ion exchange between the surface of the graphite particles and the electrolytic solution.

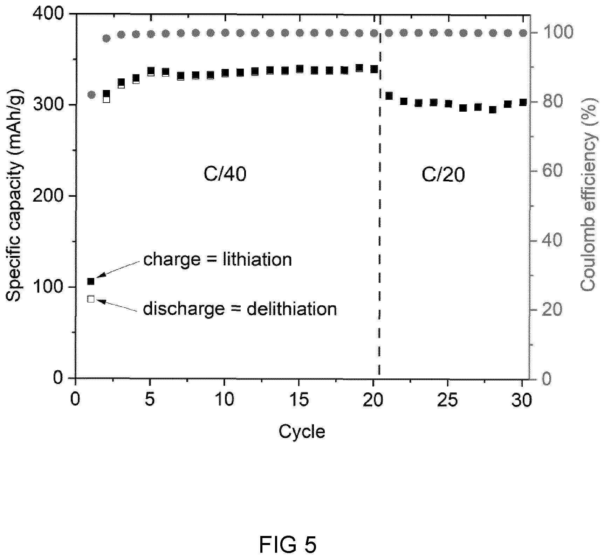

Fig. 5 shows a schematic diagram of an exemplary graph. Specific capacity and Coulomb efficiency evolution versus cycle of the graphite 3D printed electrodes with CMC pH 3 as binder is shown. The electrode composition is 90/10 in weight %.

The capacities of the 3D printed graphite electrodes were measured in a half-cell configuration using standard components (Celgard separator, LP30 electrolyte), see cell preparation part. The initial specific capacity was limited with the first discharge (i.e. oxidation, delithiation) and charge (i.e. reduction, lithiation) to be 87 and 108 mAh/g respectively (fig. 5) and a limited Coulomb efficiency of 87%.

The specific capacity and Coulomb efficiency are dramatically increasing for the second cycle with values of 305 (discharge) and 312 (charge) mAh/g, respectively, and a Coulomb efficiency of 97.9%. In the following cycles, the specific capacity is continuously increasing to reach during the fifth cycle, a discharge of ca. 335 mAh/g, a charge of 338 mAh/g and a Coulomb efficiency of 99.3%. The specific capacity of 335 mAh/g in discharge corresponds to 90.8 % of the theoretical capacity of the graphite material of the 372 mAh/g, it reaches even 92.9 % when referring to the practical capacity of the commercial spherical graphite at 364 mAh/g.

From the 6^{th} to the 20^{th}, the capacity is showing very little change and can be reasonably considered as stable. The Coulomb efficiency is in another hand slowly and continuously increasing to reach 99.7% at the 20^{th} cycle.

Since a half-cell configuration (the SEI at the Li-metal/electrolyte interface is not stable) and a standard LP30 electrolytic solution without any additive was employed higher Coulomb efficiency is hardly reachable.

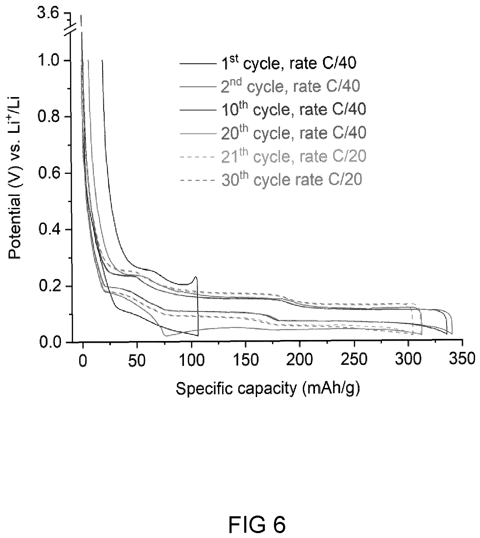

After 20 cycles, the charge/discharge rate is increased to be at C/20. A significant loss of capacity to attain 311 mAh/g in charge while the Coulomb efficiency remains at 99.7% after 10 cycle at C/20 (30^{th} on figs. 5 and 6) is observed. The corresponding discharge capacity is 304 mA/g and the Coulomb efficiency is at 99.9 %.

Fig. 6 shows a schematic diagram of an exemplary graph. The charge/ discharge profile of the graphite 3D printed electrodes with CMC pH 3 as binder is shown. The electrode composition is 90/10 in weight %.

The galvanostatic profile of the first cycle (fig. 6) is not the typical one of the reduction and oxidation of the graphite. Only the last stage IV of the reduced graphite LiC₆ delithiation can be observed at ca. 0.26 V vs. Li⁺/Li. The potential hysteresis between the charge and the discharge shows a minimal value close to 0.17 V.

The galvanostatic profile of the second cycle shows a positive and dramatic evolution in comparison to the first cycle, even if it is not the typical profile of the lithiation and delithiation of a graphite electrode, especially in reduction. A first cathodic pseudo-plateau at 0.17-0.18 V vs. Li⁺/Li at the early stage of the second reduction (ca. 20-40 mAh/g) is observed, followed by a potential drop reaching almost 0.02 V vs. Li⁺/Li at ca. 75 mAh/g to then re-increase until reaching 0.048 V vs. Li⁺/Li at 130 mAh/g, to decrease again and reaches a long pseudo-plateau at 0.045 V vs. Li⁺/Li between 170 and 270 mAh/g. The second oxidation is typical of the reduced graphite LiC₆ delithiation showing the standard profile with the successive potential plateaus which are correlated to four transition stages of the graphite lithiation. The stage I (highly lithiated graphite, theoretical chemical formula of LiCe) is close to 0 V vs. Li⁺/Li. The stage II has a chemical formula of LiC₁₂ and the anodic plateau at 0.11 V vs. Li⁺/Li corresponds to the transition from LiC₆ to LiC₁₂. The stage III is attained with LiC₁₈. The anodic plateau at 0.155 V vs. Li⁺/Li corresponds to the transition between LiC₁₂ to LiC₁₈. The stage IV is attained after the anodic plateau at 0.240 V vs. Li⁺/Li. The minimal potential hysteresis is decreased to a value of 0.074 V, supporting a beneficial change in the electrochemical kinetics of the graphite electrode during the second cycle in comparison to the first cycle.

The following cycles represented 10^{th} and 20^{th} are typical of the electrochemical lithiation/delithiation of the graphite electrode with three well-known potentiostatic plateaus both in cathodic (lithiation) and anodic (delithiation) mode. The minimal potential hysteresis value is 0.044 V. No clear difference is visible between the galvanostatic profile of the 10^{th} and the 20^{th} cycles, confirming the stable electrochemical behavior of the 3D printed graphite electrode in this testing conditions. Increasing the charge/discharge rate to C/20 is logically decreasing the specific capacity. The expected capacity loss between the 20^{th} cycle (C/40 rate) and the 21^{st} cycle (C/20 rate) is inferior to 10% and considered acceptable for such thick graphite electrode. The loss of capacity by increasing the C-rate is attributed to resistance effect increased by higher current density. Interestingly, the galvanostatic profiles between the 20^{th} and the 21^{st} cycle remain mostly unchanged, all the potentiostatic plateaus are visible. Only a limited overpotential of ca. 0.016 V both in reduction and oxidation is recorded. It corresponds to an increase of the minimal potential hysteresis of 0.032 V, i.e. with a value close to 0.076 V. When reaching the 30^{th} cycle, only a slight increase of 0.01 V of the cathodic overpotential after 200 mAh/g and a loss of 6 mAh/g of the specific capacity is seen in comparison to the 21^{st} cycle.

Very similar observations were obtained by repeating the battery testing with other 3D printed graphite electrodes from the same batch of production.

It can be concluded that 3D printed graphite electrodes with CMC at pH = 3 as binder are able to deliver a reversible specific capacity close to 340 mAh/g of graphite, an operative potential inferior to 0.4 V vs. Li⁺/Li for more than 95 % of the electrode capacity.

The low specific capacity of the first cycle is attributed to a kind of electrode activation. The graphite volume may change (ca. 10% in the c-axis when reaching LiC₆ state due to the Li--ion intercalation between the graphene sheets) to induce, during the initial reduction/oxidation step, different structural micro-rearrangements within the 3D printed electrode. This micro-rearrangements are supposed to increase the contact area at the boundaries between the graphite particles, thus increasing the electronic percolation and finally the electrode capacity. In the same time that these micro-arrangements occur, the SEI is formed on the surface of the graphite electrodes (pores included).

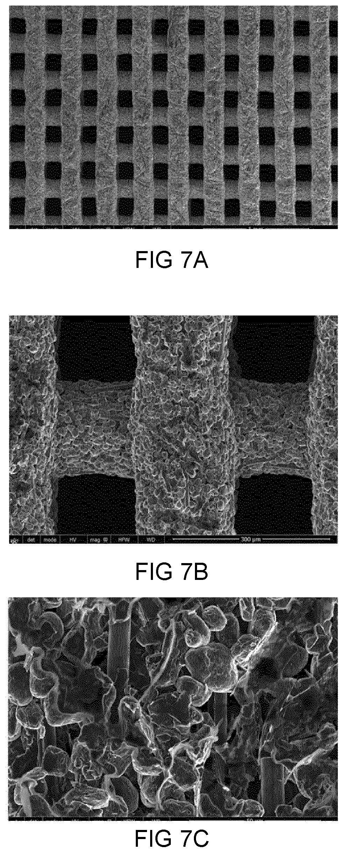

Fig. 7a, 7b, 7c show an image of an exemplary embodiment of an anode porous structure. The SEM images of the graphite 3D printed electrodes with CMC and carbon micro-fiber are shown. The electrode composition is graphite/CMC/fiber 85/10/5 in weight %.

In order to improve the mechanical properties and electronic conductivity of the 3D printed graphite electrode, carbon micro-fibers (Sigrafil milled carbon fibers C M80-3.0/200-UN) were added in the formulation of the paste. The shape of the graphite electrode in fig. 7 is globally the same than in fig. 4 i.e. without carbon fibers. The fibers appears themselves a bit less regular in the size of diameter, the latter are significantly bigger (ca. 200 µm) at the crossings with the fiber underneath that between the crossings (ca. 170 µm). The surface of the fibers is obviously rougher on fig. 7 than on the fig. 4, with linear surfaces scratches having the same dimension than the carbon micro-fibers present on the surface/. It is suspected that these scratches to be the remnant of microfibers which were present on the surfaces of freshly print electrodes and were most probably loss during the drying step. Thus the scratches for electrodes containing microfibers are hardly avoidable. The highest magnification confirms also the presence of carbon micro-fibers within the printed fibers.

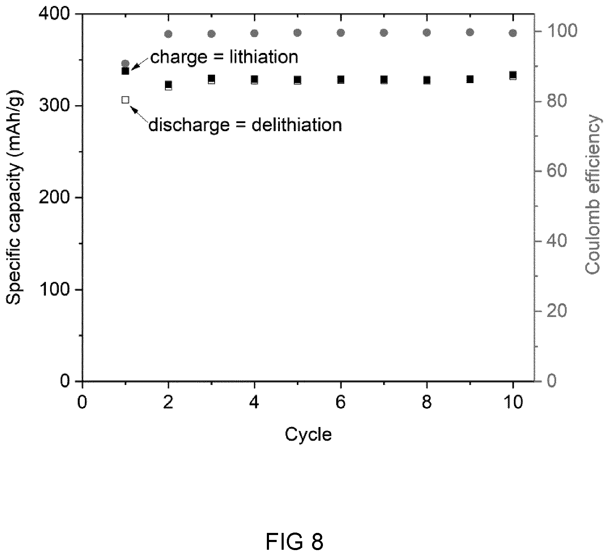

Fig. 8 shows a schematic diagram of an exemplary graph. Specific capacity and Coulomb efficiency evolution versus cycle of the graphite 3D printed electrodes with CMC and carbon micro-fiber is shown. The electrode composition is graphite/fiber/CMC 85/5/10 in weight %. The areal graphite loading is ca. 42.2 mg of graphite/cm². C-rate is C/40.

Fig. 8 shows the evolution of the specific capacity and the Coulomb efficiency versus cycle of a 3D printed anode containing graphite/carbon micro-fiber/CMC with the 85/5/10 weight ratio. The presence of the carbon microfiber is not influencing the maximum specific capacity and Coulomb efficiency value, 332 mAh/g in discharge and 333 mAh/g in charge and 99.6 %, of the graphite material present in the 3D printed electrodes when compared to the fig. 5. Thick electrodes containing five layers, graphite loading superior to 40 mg/cm², are not showing any loss in term of the performance of the graphite as lithium intercalation material. Thus a reversible areal capacity (Figure 6) superior to 14 mAh/cm² after 10 cycles is reached. Such high areal capacity is not described for carbon-based anode in the known art. According to the disclosure, a sluggish electrochemical kinetics of thick graphite-based electrodes produced by standard tape-casting "doctor-blading" method can be effectively prevented. Another parameter to take in account on the advantage of our 3D printing graphite-based electrode protocol is the simpler and faster preparation process of the dispersion (paste). The mixing time of the paste for the 3D printing is much shorter than two hours and no deareation step under vacuum is needed.

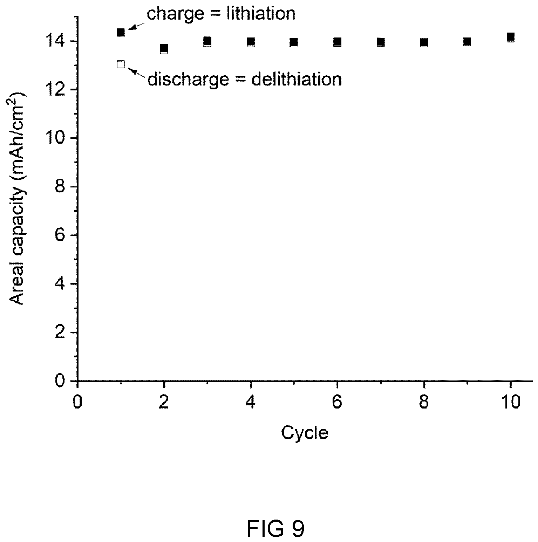

Fig. 9 shows a schematic diagram of an exemplary graph. Areal capacity evolution versus cycle of the graphite 3D printed electrodes with CMC and carbon micro-fiber is shown. The electrode composition is graphite/fiber/CMC 85/5/10 in weight %. The areal graphite loading is ca. 42.2 mg of graphite/cm². C-rate is C/40.

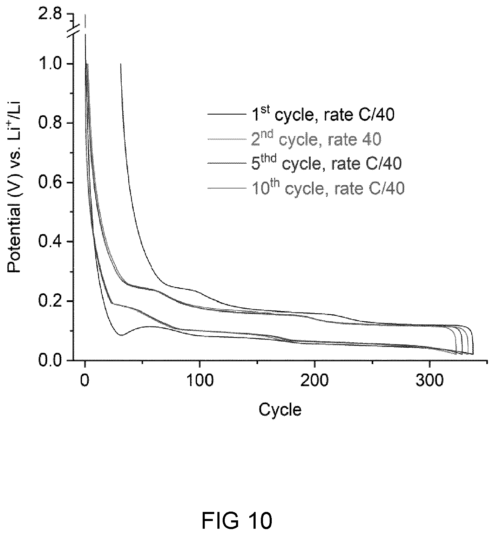

Fig. 10 shows a schematic diagram of an exemplary graph. A charge/ discharge profile of the graphite 3D printed electrodes with CMC and carbon micro-fibers is shown. The electrode composition is graphite/fiber/CMC 85/5/10 in weight %. The areal graphite loading is ca. 42.2 mg of graphite/cm².

LTO-based anodes has an operative voltage at ca. 1.5 V vs Li⁺/Li which is more than one volt superior to the operative voltage of graphite based- anode (figs. 6 and 10). High voltage anode is highly detrimental for the energy density of a full-cell Li-ion battery, E (Energy) = U (Volt) * Q (Capacity). The operative voltage of the cell LFP/LTO is in the range of 2.0 V or even lower while the operative voltage of an LFP/graphite cell is above 3.0 V. In addition, the LTO material present a limited specific capacity ca. 170 mAh/g which is significantly impeding the gravimetric capacity of the cell.

The galvanostatic profiles of the graphite/fiber/CMC electrode are shown in the fig. 10. Only the profile of the first cycle is anomalous. All galvanostatic profiles of the following cycles are typical of the galvanostatic lithiation and delithiation of the graphite material. The activation phenomenon (see previous part) may also be present in this case even if it is much less dramatic than in the fig. 6 and limited mostly to the first reduction step. The early stage of the first reduction is clearly anomalous with a rapid drop to reach a potential of 0.085 V vs. Li⁺/Li at 32 mAh/g. The potential is then increasing to reach 0.11 V vs. Li⁺/Li at 57 mAh/g to decrease immediately and reaching a pseudo-potentiostatic plateau at ca. 0.08 V vs. Li⁺/Li at 100 mAh/g and finally a last potentiostatic plateau at 0.05 V vs. Li⁺/Li at 190 mAh/g. The capacity of the reduction is the highest one but the SEI formation has to be taken in account with the Coulomb efficiency of 90.8% corresponding to an irreversible capacity of 31 mAh/g. The galvanostatic profile of the first oxidation is very similar to the one following oxidations taking in account the limited reversibility. The potential hysteresis of the first cycle is ca. 0.066 V, only 0.01 V more than the hysteresis of the following cycles. As previously reported, the galvanostatic profile from the 2^{nd} to the 10^{th} cycle are almost identical, except of the limited increase of the specific capacity (which is even beneficial), thus supporting the high stability of the 3D printed graphite electrodes in these testing conditions.

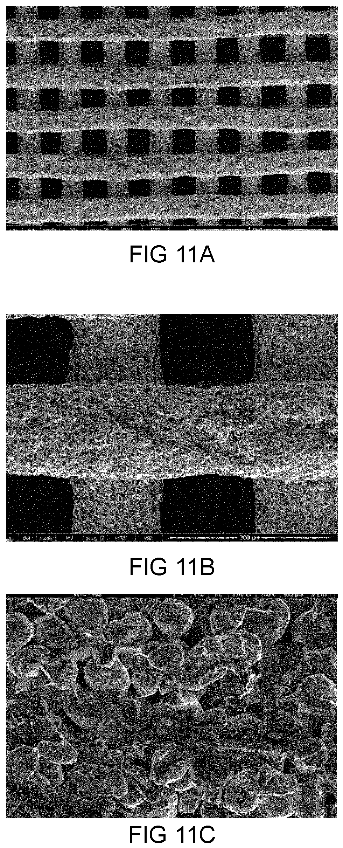

Fig. 11a, 11b, 11c show an image of an exemplary embodiment of an anode porous structure. SEM images of the graphite 3D printed electrodes with CMC and PEDOT:PSS as binders are shown. The electrode composition is graphite/CMC/PEDOT:PSS 90/7.85/2.15 in weight %.

Conductive PEDOT:PSS conductive polymer was added as binder in the formulation of the 3D printed graphite anode in order to increase the electron percolation within the electrode and thus its electrochemical properties. The shape of the graphite electrode in fig. 11 is globally the same than in figs. 4 and 7. The spacing between the fibers is less monotonous, with limited wave-like geometry. Similarly to the fig. 11, the printed fibers show a diameter significantly bigger (ca. 180 µm) at the crossings with the fiber underneath that between the crossings (ca. 165 µm).

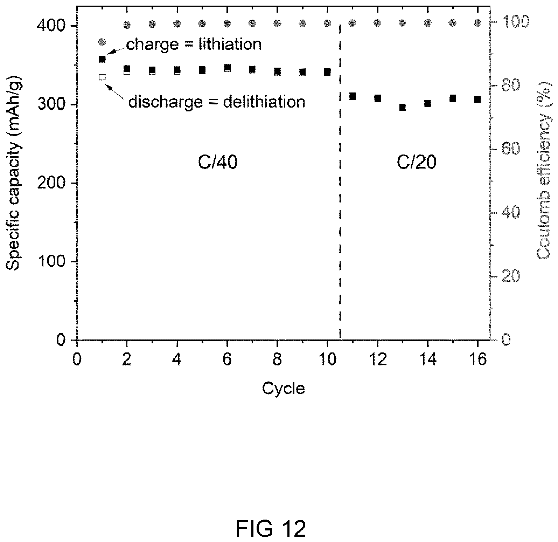

Fig. 12 shows a schematic diagram of an exemplary graph. Specific capacity and Coulomb efficiency evolution versus cycle of the graphite 3D printed electrodes with CMC and PEDOT:PSS as binders is shown. The electrode composition is graphite/CMC/PEDOT:PSS 90/7.85/2.15 in weight %. The areal graphite loading is ca. 26.6 mg of graphite/cm².

The fig. 12 put under light the positive effect of adding a conducting polymer PEDOT:PSS as co-binder in the formulation of the 3D printed graphite electrodes. For the first cycle, high specific capacity of 358 and 335 mAhg/g in charge (reduction) and discharge (oxidation) are obtained. It means that a reversible capacity (superior to 90% and 92% versus theoretical and practical capacity, respectively) and high coulomb efficiency (superior to 90%) are reached since the first cycle. The second cycle present a reversible capacity superior to 342 mAh/g (ca. 92% and 94% versus theoretical and practical capacity, respectively) and a Coulomb efficiency of 99.0%.

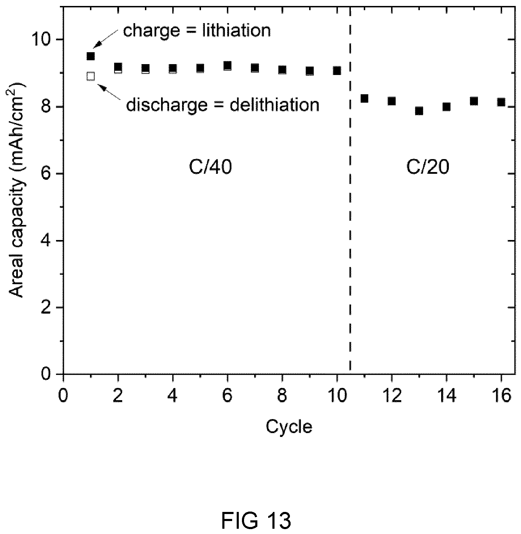

Fig. 13 shows a schematic diagram of an exemplary graph. Areal capacity versus cycle of the graphite 3D printed electrodes with CMC and PEDOT:PSS as binders is shown. The electrode composition is graphite/CMC/PEDOT:PSS 90/7.85/2.15 in weight %. The areal graphite loading is ca. 26.6 mg of graphite/cm².

The capacity remains stable for the following cycles at C/40 and the Coulomb efficiency increases until reaching 99.7% at the tenth cycle. The corresponding areal capacity (fig. 13) is superior to 9.0 mAh/cm² with a graphite loading of 26.6 mg/cm². At higher C-rate C/20, a limited loss of capacity of ca. 10%, to reach values at ca. 310 mAh/g (ca. 8.24 mAh/cm²) and Coulomb efficiency of 99.7% for the 11^{th} cycle is observed. The capacity remains stable to show values of ca. 306mAh/g (ca. 8.14 mAh/cm²) and Coulomb efficiency of 99.8% for the 16^{th} cycle.

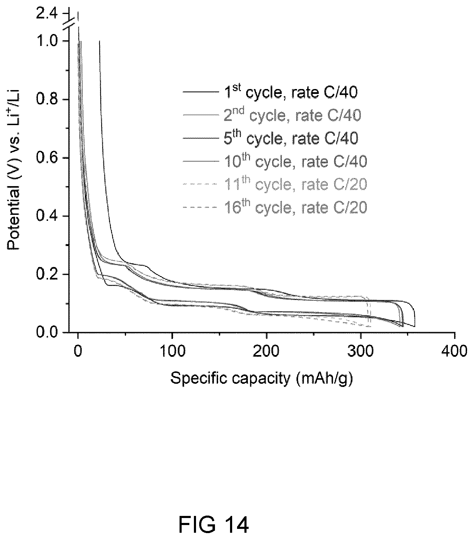

Fig. 14 shows a schematic diagram of an exemplary graph. A charge/ discharge profile of the graphite 3D printed electrodes with CMC and PEDOT:PSS as binders is shown. The electrode composition is graphite/CMC/PEDOT:PSS 90/7.85/2.15 in weight %. The areal graphite loading is ca. 26.6 mg of graphite/cm².

In comparison, the 3D printed graphite electrodes containing CMC/PEDOT:PSS binders present typical graphite electrodes galvanostatic profiles (fig. 14) both at C/40 and C/20 with four well defined potentiostatic plateaus both in reduction (lithiation) and oxidation (delithiation). The minimum potential hysteresis is 0.042 and 0.064 V at C/40 and C/20 rate, respectively which are clearly smaller than the potential hysteresis of the other 3D printed graphite electrodes (CMC as binder only with and without the presence of carbon micro-fibers). This values have to be compared with the fig. 6 with potential hysteresis of 0.044 (C/40) and 0.076 V (C/20). The minimal potential hysteresis at C/40 are close for the two electrode formulations but taking in account that it is the 20^{th} cycle for the fig. 6 (no conductive PEDOT:PSS) while this value is reached since the 2^{nd} cycle for the fig. 14 (with conductive PEDOT:PSS present) and the loading of ca. 30 % superior for the latter in comparison to the former. The difference between the potential hysteresis at higher charge rate (C/20) is obvious, superior to 0.01 V i.e. a decrease superior to 15% of the minimal potential hysteresis is obtained by adding the PEDOT:PSS in the electrode formulation. These observations support the positive effect of using a conductive binder in the formulation to improve the electrochemical kinetics of the electrode, attributed to a better grain boundaries electric transport. It also suggest that adding other conductive additives (carbon black, hard-carbon, carbon nanotubes, carbon fibers...) will allow to beneficially increase even more the electronic percolation within the 3D printed electrode.

In view of the above mentioned examples, the 3D printed based carbon electrode can have the following important advantageous features with respect to electrodes known in the art:
- low operative voltage, inferior to 0.5 V vs. Li⁺/Li for more than 95 % of the total capacity;
- high areal capacity superior to the standard high capacity of 6 mAh/cm², even value superior to 13 mAh/cm² are reached; and
- high first Coulomb efficiency, superior to 90, even superior to 93% are reached.

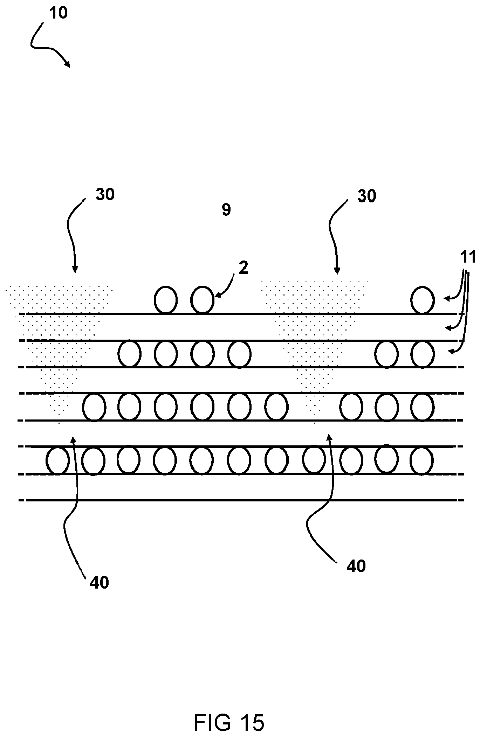

Fig. 15 shows a schematic diagram of a cross sectional side view of an exemplary embodiment of an anode porous structure 10. The filaments 2 are deposited such that the intra-structure pores have a shape with a wider opening 30 approximate one end of the porous anode structure 10 and a narrower opening 40 approximate to the other end of the porous anode structure 10, wherein the wider opening 30 is formed at one or more top layers of the stacked layers.

Hence, in some examples, the size of the pores may change in a thickness direction of the anode porous structure. For example, the top (free end) of the anode may be more open than the bottom (end in contact with a surface). As a result, the bottom portion of the anode may have more contact surface area for conductivity, and the pores may be more open on the top portion (cf. free end, opposite the bottom portion) which is beneficial for liquid diffusion.

It will be appreciated that the carbon based active material may be a material mainly having carbon as the active material. For example, the carbon based material may be graphite. The use of graphite may result in a high capacity. However, various other materials may be used. For example, the carbon based active material may be carbon silicon, hard carbon, or compounds thereof. For instance, a compound may be used including hard carbon and graphite. Also compounds with one or more metals may be used, such as for instance a compound including tin and carbon (e.g. more than 95 wt% carbon, and less than 5 wt% tin).

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of manufacturing of an anode for use in a battery, including depositing interconnected filaments of a build material in a predetermined arrangement in a plurality of stacked layers, wherein the filaments of the consecutive layers are connected to one another to obtain a porous anode structure with intra-structure pores formed between filaments, wherein the build material comprises a carbon based active material.

2. The method according to claim 1, wherein a mesh of pores is formed in each layer.

3. The method according to claim 2, wherein the mesh of pores has a regular pattern, wherein the pores are interconnected in the porous anode structure.

4. The method according to any one of the preceding claims, wherein the build material comprises at least 60 wt.% of a carbon based anode active material, more preferably at least 80 wt.%, even more preferably at least 85 wt.% with respect to the total weight of the build material

5. The method according to claim 1, 2 or 3, wherein the carbon based active material includes at least one of graphite, soft carbon, hard carbon or a composite comprising one or more of the afore mentioned materials.

6. The method according to any one of the preceding claims, wherein the porous anode structure has a thickness in a range between 0.1 to 5 millimeter, preferably in range of 0.2 to 1 millimeter, more preferably in a range of 0.4 to 0.7 millimeter.

7. The method according to any one of the preceding claims, wherein the deposited anode has at least two stacked layers, more preferably at least three stacked layers, even more preferably at least four stacked layers.

8. The method according to any one of the preceding claims, wherein the deposited anode has a capacity per unit surface area of at least 8 milliampere hour per cm², more preferably at least 10 milliampere hour per cm², even more preferably at least 12 milliampere hour per cm².

9. The method according to any one of the preceding claims, wherein the deposited anode has a specific capacity per gram of anode material of at least 80% of a theoretical specific capacity calculated from the composition of the build material, preferably at least 85%, more preferably at least 90 %.

10. The method according to any one of the preceding claims, wherein the filaments have a diameter between 50 to 750 micron, more preferably 75 to 500 micron.

11. The method according to any one of the preceding claims, wherein the filaments in each layer are spaced apart, wherein a gap distance between opposing adjacent filaments in each layer is smaller than the thickness of the filaments.

12. The method according to any one of the preceding claims, wherein the filaments are deposited such that the intra-structure pores have a shape with a wider opening approximate a first end of the porous anode structure and a narrower opening approximate a second end of the porous anode structure, the second end being opposite the first end, and wherein the wider opening is formed at one or more upper layers of the stacked layers.

13. The method according to any one of the preceding claims, wherein the pores in the stacked layers have rectangular shape.

14. An anode for use in a battery, the anode including interconnected filaments of a build material positioned in a predetermined arrangement in a plurality of stacked layers, wherein the filaments of the consecutive layers are connected to one another to obtain a porous anode structure with intra-structure pores formed between filaments, wherein the build material comprises a carbon based active material.

15. A battery cell comprising a three-dimensional porous anode structure according to claim 14.
